Europäisches Patentamt

**European Patent Office**

**Office européen des brevets**

(11) Numéro de publication: **0 239 516**
**A1**

## (12) DEMANDE DE BREVET EUROPEEN

(21) Numéro de dépôt: **87450004.4**

(22) Date de dépôt: **25.03.87**

(51) Int. Cl.⁴: **A 01 G 9/24**

(30) Priorité: **27.03.86 FR 8604642**
**23.10.86 FR 8614856**

(43) Date de publication de la demande:
**30.09.87 Bulletin 87/40**

(84) Etats contractants désignés:
**BE DE ES GB IT NL**

(71) Demandeur: **Journiac, René**
**Journiac le Bourg**
**F-24260 Le Bugue (FR)**

(72) Inventeur: **Journiac, René**
**Journiac le Bourg**
**F-24260 Le Bugue (FR)**

(54) **Dispositif automatique d'ouverture et de fermeture des bordures de film translucide de tunnels utiliss en culture.**

(57) Le dispositif automatique pour l'ouverture et la fermeture des bords du film translucide 40 comporte un tube creux en circuit fermé rempli d'un fluide sensible aux changements de température de sorte que ce tube placé à l'intérieur du tunnel de culture subit cesdits changements detempérature lesquels provoquent des changements de pression du fluide engendrant le déplacement d'au moins un piston qui provoque la rotation du tambour 55 lequel met en traction un câble 38 qui par l'intermédiaire d'un chariot spécial composé des éléments 59, 60, 62, et 64, provoque l'enroulement du bord du film translucide 40. Le chariot s'élevant au fur et à mesure de l'enroulement du film, guidé par deux arceaux parallèles servant de rails.

La baisse de température entraîant un relachement du câble 38 lequel permet au film translucide enroulé de se dérouler sous son propre poids et sous celui du tube 41.

FIG 9

EP 0 239 516 A1

## Description

### DISPOSITIF AUTOMATIQUE D'OUVERTURE ET DE FERMETURE DES BORDURES DE FILM TRANSLUCIDE DE TUNNELS EN CULTURE.

La présente invention concerne un dispositif automatique pour l'ouverture et la fermeture des bords de films translucides constituant les tunnels destinés à la culture selon la température ambiante à l'intérieur desdits tunnels.

On connaît les tunnels utilisés en culture comportant des arceaux espacés servant d'ossature support à un film translucide tel que polyéthylène de fermeture, selon le type de culture réalisé sous les tunnels il est nécessaire à une certaine température ambiante d'aérer ces derniers et pour ce faire on pratique manuellement la remontée des bords latéraux du film que l'on immobilise par tous moyens appropriés, cette opération représente un travail laborieux et est laissée à la seule initiative du cultivateur.

L'invention a pour but de pallier aux inconvénients précédemment exposés.

Le dispositif automatique objet de l'invention, pour l'ouverture et la fermeture des bords de films translucides constituant les tunnels destinés à la culture, est caractérisé en ce qu'il consiste en au moins un tube creux en matériau ferreux ou non ferreux disposé à l'intérieur du tunnel constituant un circuit fermé pour un liquide sensible aux changements de température contenu dans ledit circuit, les changements de pressions dus aux changements de température ambiante à l'intérieur du tunnel engendrant le déplacement d'au moins un piston qui par l'intermédiaire d'un câble en appui sur ledit piston provoque la rotation de deux bras mobiles symétriques reliés aux bas des bords du film translucide et/ou la rotation d'un arbre sur lequel s'enroule un ou plusieurs câbles dont l'une de leurs extrémités est fixée intérieurement au tunnel et sur la ou les boucles formées repose un tube contrepoids sur lequel s'enroule et/ou se déroule le film translucide, la remontée des bords du film translucide ayant lieu lors de l'élévation de la température ambiante tandis que la retombée des bords s'effectue lors du retrait du piston par le simple poids du film translucide et des éléments inférieurs d'attache.

D'autres caractéristiques et avantages de l'invention ressortiront plus clairement de la description qui va suivre faite en regard des dessins joints donnés à titre d'exemple non limitatif, où :
- la figure 1 est une vue de face d'un dispositif automatique dont le tube se profile avec les arceaux du tunnel,
- la figure 2, une variante de réalisation d'un dispositif automatique dont la tubulure est constituée par deux éléments parallèles,
- la figure 3, une autre variante de réalisation de dispositif automatique dont la tubulure est contenue dans le tunnel,
- la figure 4, un dispositif automatique pour tunnel de grand diamètre,
- la figure 5, le détail du piston aux extrémités de la tubulure,
- la figure 6, le détail du mécanisme servant à l'enroulement des bords du film translucide,
- la figure 7, une variante de réalisation d'un dispositif automatique pour tunnel de grand diamètre,
- la figure 8, est une variante vue de droite du chariot d'enroulement du bord du film translucide,
- la figure 9, est une variante vue de face du chariot d'enroulement du bord du film translucide et de ses liaisons avec le dispositif automatique.

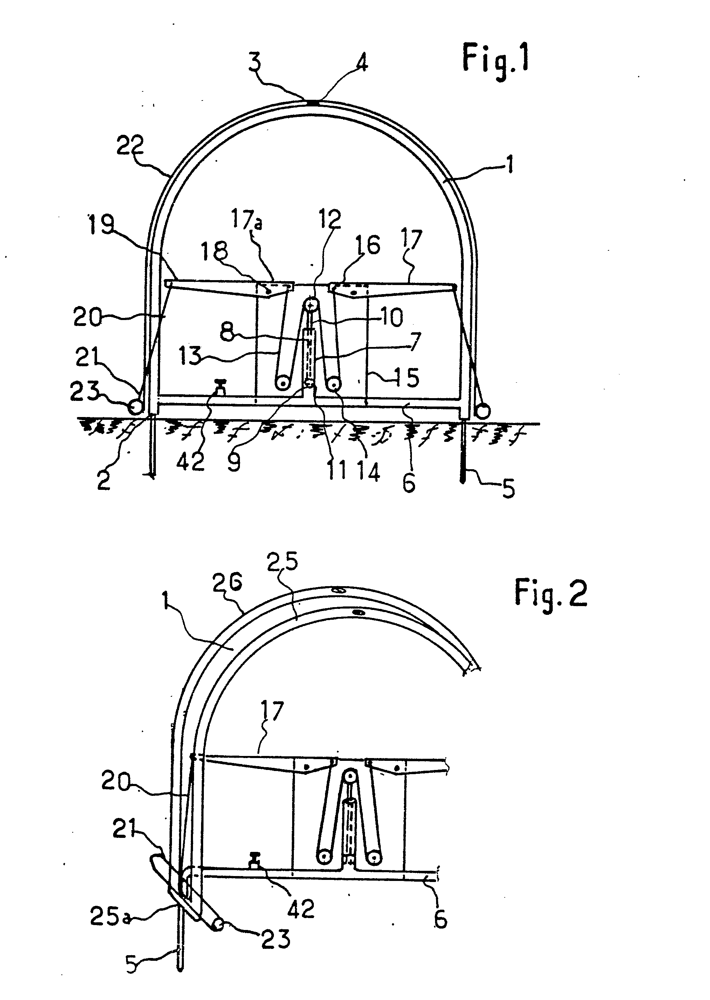

Tel que représenté figure 1 le dispositif automatique d'ouverture ou fermeture des bordures de film translucide constituant les tunnels utilisés en culture comporte un arceau creux 1 en matériau ferreux ou non ferreux se profilant avec les arceaux classiques destiné à être implanté en remplacement d'un arceau classique à raison d'un sur deux en général, ledit arceau creux 1 est obturé en ses extrémités 2 afin de contenir un liquide sensible aux changements de température tel que mélange alcool éthylique et glycol, introduit au moyen de l'orifice 3 placé au centre de l'arceau 1 et obturé par un bouchon 4. Afin d'immobiliser l'arceau 1 en terre, au niveau des obturations 2 une fiche 5 prolonge les extrémités dudit arceau 1. En partie supérieure des obturateurs 2, un tube creux 6 raccorde les extrémités de l'arceau 1 et engendre un circuit fermé pour le liquide sensible à la chaleur, en son centre une élévation verticale 7 constitue la chemise d'un piston 8 dont l'extrémité 9 de la tige 10 comporte les joints d'étanchéité 11, en son autre extrémité la tige 10 est dotée d'une roulette mobile 12 sur laquelle s'appuie un câble 13, ce dernier étant tendu sur un jeu de roulettes mobiles 14 inférieures fixées sur une platine 15 solidaire du tube 6 de façon symétrique, les extrémités 16 du câble 13 étant fixées chacune à une extrémité 17a de chaque bras symétrique 17 maintenu articulé au moyen de pivots 18 sur la platine 15, en leur autre extrémité 19 les bras 17 comportent un câble 20 relié en l'extrémité basse des bords 21 du film translucide 22 ce dernier étant enroulé et immobilisé à l'aplomb de la jonction avec le câble 20 sur des cornouillers 23 par exemple dont le poids permet par temps frais d'immobiliser les bords 21 sur le sol. Lorsque la température augmente à l'intérieur du tunnel, le déplacement du piston 8 engendre la rotation des bras 17 qui provoque la remontée des bords 21 du film translucide 22 et lors de l'abaissement de la température la remise en place desdits bords 21 du film plastique 22 facilitée par le poids des cornouillets 23. Afin de régler le débattement des bras en fonction de la température une valve de réglage 42 est prévue.

Selon la variante représentée figure 2, l'arceau 1 est constitué par deux tubes creux 25 et 26, parallèles reliés en leurs extrémités basses 25a où est repiqué le tube creux 6 comportant le mécanisme comme précédemment décrit, les câbles 20 reliant les extrémités basses 21 du film translucide 22 passent entre les deux tubes creux 25 et 26.

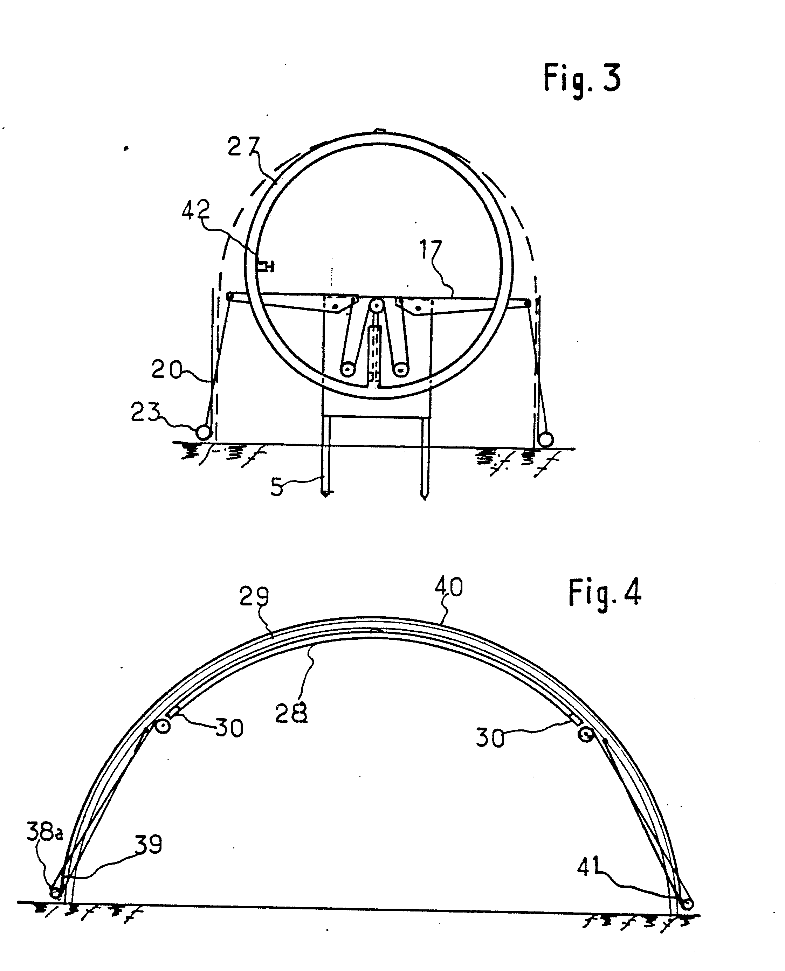

Selon la variante représentée figure 3 l'arceau 1 est remplacé par un tube profilé 27 généralement de manière circulaire, ce dernier étant disposé entre deux arceaux classiques à l'intérieur du tunnel.

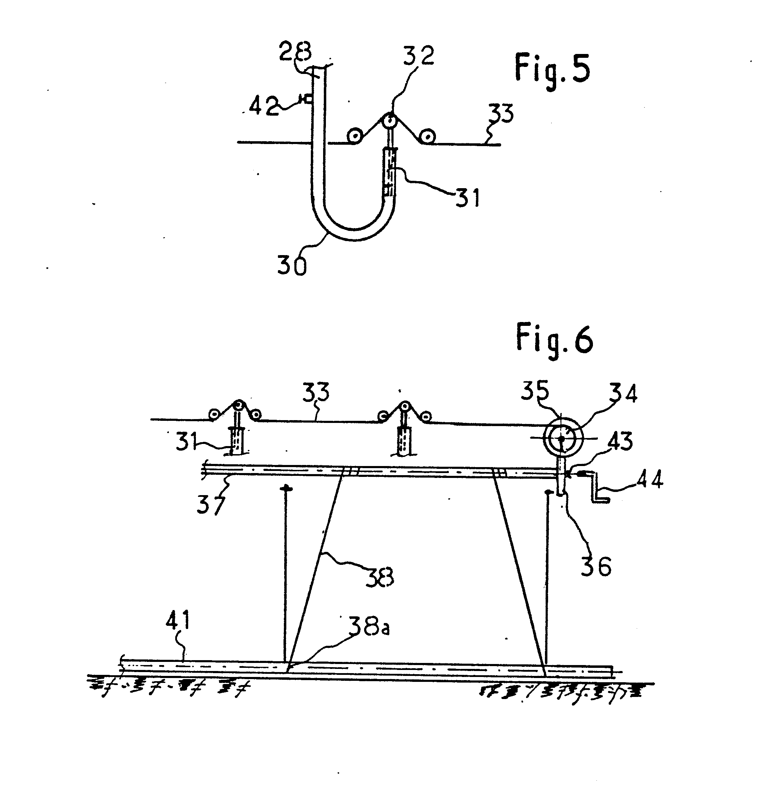

Tel que représenté figures 4, 5 et 6, le dispositif automatique pour tunnel de grand diamètre comporte un tube profilé 28 maintenu sous un arceau 29, en ses extrémités il présente un col de cygne 30 dans chacun desquels est contenu le piston 31 muni d'une roulette 32 en appui sur le câble 33 dont une extrémité est immobilisée en une extrémité du tunnel tandis que son autre extrémité est enroulée sur un tambour 34 solidaire d'un pignon d'angle 35 et/ou tambour engendrant avec le pignon 36 et/ou tambour prolongé par un arbre 37 se développant sur toute la longueur du tunnel, le mécanisme de remontée des bords 39 du film translucide.

Durant l'action du piston ou des pistons 31 sur le câble 33 lors de l'élévation de la température à l'intérieur du tunnel s'effectue la rotation du tambour 34 et pignons 35 et 36 et/ou tambour et de ce fait la rotation de l'arbre 37 sur lequel s'enroulent les câbles 38 dont les extrémités sont immobilisées à l'intérieur du tunnel provoquant la remontée des bords 39 du film translucide 40, lesdits bords 39 étant au préalable immobilisés chacun sur un tube 41 servant de contrepoids placé extérieurement aux arceaux 29 et se développant sur toute la longueur du tunnel les tubes 41 reposant sur les boucles 38a formées par les câbles 38, lors de l'abaissement de la température provoquant le retrait du ou des pistons 31, le poids du film translucide 40 et du tube 41 engendre la rotation inverse du tambour 34 et de ce fait la fermeture progressive des bords 39, il va de soi comme précédemment décrit qu'une valve de réglage 42 est prévue, ainsi qu'est aménagé sur le pignon 36 et/ou tambour une dent de loup 43 pour recevoir éventuellement une manivelle 44 pour une manoeuvre manuelle et un dispositif d'immobilisation connu en soi.

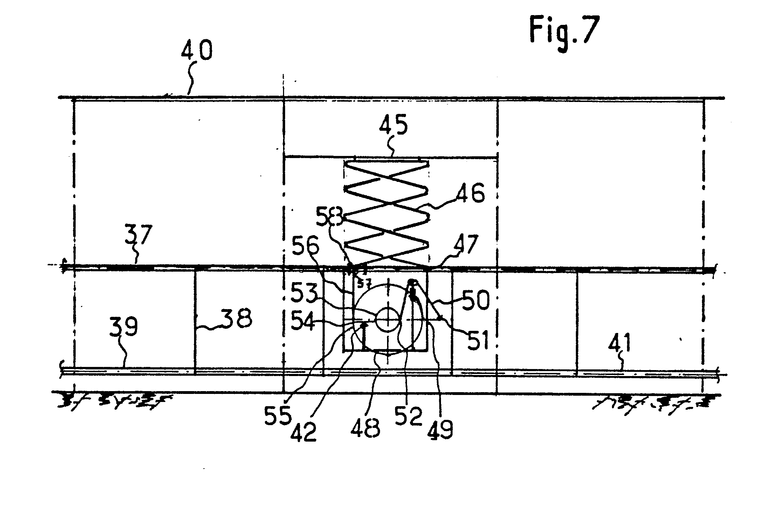

Selon la variante représentée figure 7, le dispositif automa tique se compose d'un tube creux 45 dont la partie supérieure en forme de serpentin 46 est disposée parallèlement au film translucide 40 et ce de manière à ce que la chaleur rayonnante au travers dudit film 40 agisse sur le liquide sensible à la chaleur contenu dans le circuit fermé, ledit serpentin 46 est disposé au-dessus du relevage maximum des bords 39 du film 40, en sa partie inférieure les extrémités 47 du serpentin 46 se prolongent et sont reliées par un tube 48 sur lequel est raccordée la valve de réglage 42 et le piston 49 agissant sur le câble 50 immobilisé en son extrémité 51 tandis que son autre extrémité 52 est enroulée sur le tambour rotatif 53, ledit tambour 53 étant accouplé au moyen d'un embrayage 54 à un second tambour 55 de plus grand diamètre sur lequel est enroulé ou s'enroule le câble 56 dont l'autre extrémité 57 est enroulée sur un touret 58 solidaire de l'axe 37 sur lequel s'enroulent les câbles 38 engendrant la remontée des bords 39 du film 40 comme précédemment décrit, une manivelle et des dispositifs de blocage sont prévus pour éventuellement agir manuellement.

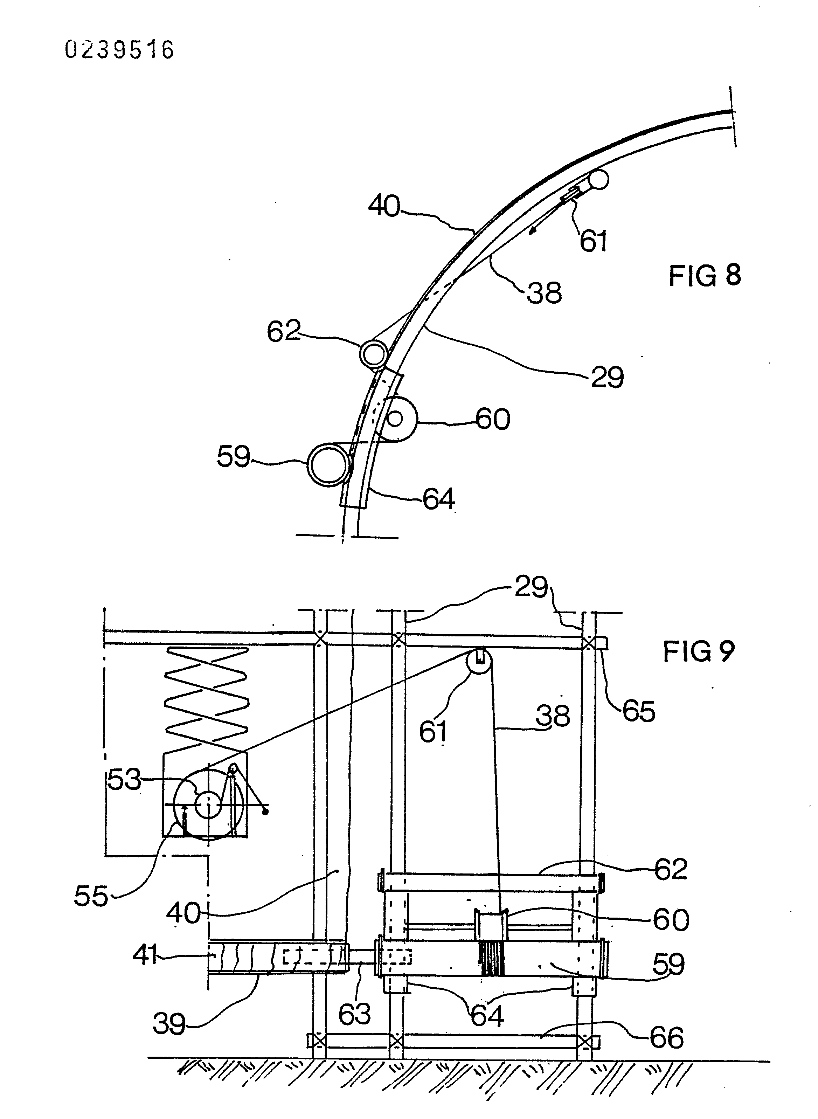

Selon la variante présentée figures 8 et 9, l'enroulement du bord 39 du film translucide 40 sur le tube 41 servant de contrepoids placé extérieurement aux arceaux 29 sur toute la longueur du tunnel, est assurée par au moins un chariot placé au moins à une des extrémitées dudit tunnel. Ce chariot d'enroulement mobile s'élevant au fur et à mesure de l'enroulement du film.

Le chariot est actionné par la mise en traction d'un câble souple 38. Le tube 41 d'enroulement du film translucide est liaisonné en rotation avec le tambour cylindrique 59 du chariot par l'intermédiaire d'un arbre 63. Cet arbre 63 permettant la montée du chariot au fur et à mesure de la montée du tube 41 lors de l'enroulement du film translucide.

Lorsque le câble 38 relié au tambour 59 est mis en traction sous l'effet de la rotation du tambour 53 accouplé au tambour 55 auquel il est relié directement, cette traction par l'intermédiaire des poulies folles 60 et 61, du cylindre fou 62 et du tambour 59, entraîne la rotation du tube 41 et provoque l'enroulement du bord 39 du film translucide 40 ainsi que l'élévation du chariot au fur et à mesure dudit enroulement. Le chariot ayant la particularité d'être guidé par deux arceaux parallèles 29 solidarisés par des entretoises 65 et 66 clavetées sur lesdits arceaux. Les deux arceaux 29 servant de rails de guidage aux tubes creux 64.

Lorsque le tambour 59 et le tube 62 roulent sous l'effet de la traction du cable 38, ils ont l'avantage de se trouver en contact avec lesdits arceaux 29 moyennant une encoche dans les tubes de guidage 64. Ce contact dont l'état de surface est approprié facilite la montée du chariot au fur et à mesure de l'enroulement du film translucide.

Le mouvement de descente du tube 41 et du chariot se fait par l'action du poids propre du film enroulé et du tube 41 lorsque la traction du câble 38 est relachée.

Une particularité du chariot est qu'il peut aussi être actionné par la mise en traction du câble 38 au moyen d'un treuil manuel d'entrainement fixé sur un arceau 29.

La fermeture du bord 39 du film 40 étant commandée par un relachement de la traction du câble 38 provocant simultanément la descente du chariot et le déroulement du film translucide.

**Revendications**

1°) Dispositif automatique pour l'ouverture et la fermeture des bords latéraux de films translucides constituant les tunnels destinés à la culture caractérisé en ce qu'il consiste en au moins un tube creux (1, 25-26, 27, 28, 45) en matériau ferreux ou non ferreux disposé à l'intérieur du tunnel engendrant un circuit fermé pour un liquide sensible aux changements de température contenu dans le ou les tubes de telle sorte que les changements de pression dus aux changements de température ambiante à l'intérieur du tunnel provoquent le déplacement d'au moins un piston (8-31-49) qui en appui sur un câble (13, 33, 50) provoque la rotation de bras mobiles symétriques (17) reliés au bas des bords (21) de film translucide (22) et/ou la rotation d'un arbre rotatif (37) sur lequel s'enroule un ou plusieurs câbles 38 formant chacun une boucle 38a dans laquelle repose un tube contrepoids (41) sur lequel s'enroulent lors de la remontée et/ou se déroulent lors de la descente les bords (39) du film translucide (40), la remontée des bords (21-39) du film translucide (22-40) ayant lieu lors du déplacement du piston (8-31-49) et inversement lors du retrait, la retombée s'effectuant par le simple poids du film translucide (22-40) et des éléments inférieurs d'attache, tubes contrepoids (41) ou cornouillers (23).

2°) Dispositif automatique pour l'ouverture et la fermeture des tunnels selon la revendication 1, caractérisé par le fait que le mouvement de traction du câble (38) par l'intermédiaire du tambour (55) provoque la rotation du tube (41) ainsi que l'enroulement du bord (39) du film translucide (40) grâce à un chariot spécial guidé sur deux arceaux parallèles et composé des éléments (59), (60), (62), et (64).

3°) Dispositif automatique pour l'ouverture et la fermeture des bords de tunnels selon la revendication 1 caractérisé en ce que le tube (1a) ou les tubes (25-26) parallèles constituent un arceau 1 se profilant avec les arceaux classiques afin d'être implanté en remplacement d'un arceau classique, leur extrémité comportant une fiche (5) s'insérant en terre pour provoquer leur immobilisation.

4°) Dispositif automatique pour l'ouverture et la fermeture des bords de tunnels selon les revendications 1 et 2 caractérisé en ce que le tube (1a) et les tubes (25-26) sont reliés par un tube creux (6) en leur extrémité basse et comporte une élévation verticale (7) constituant une chambre pour un piston (8) dont le déplacement lors de l'élévation de la température provoque la remontée des bras symétriques (17) articulés sur une platine (15) au moyen de pivots (18), les extrémités (17a) des bras (17) étant reliées au câble (13) en appui sur une roulette mobile (12) solidaire de la tige (10) du piston (8) et deux roulettes inférieures mobiles (14) placées symétriquement sur la platine (15), l'autre extrémité (19) des bras (17) étant reliée par un câble (20) aux extrémités basses des bords (21) du film translucide (22) à l'aplomb des cournouillers (23) sur lesquels il sont fixés.

5°) Dispositif automatique pour l'ouverture et la fermeture des bords de tunnels selon les revendications 1 et 2 caractérisé en ce que avantageusement l'arceau (1) est remplacé par un tube profilé (27) généralement de manière circulaire se plaçant entre deux arceaux classiques du tunnel.

6°) Dispositif automatique pour l'ouverture et la fermeture des bords de tunnels selon la revendication 1 caractérisé en ce que le tube profilé (27) maintenu sous un arceau (29) présente en ses extrémités un col de cygne (30) contenant chacun le piston (31) muni d'une roulette (32) en appui sur le câble (33) engendrant la rotation d'un tambour (34) au moyen de pignons (35-36) et celle de l'arbre (37).

7°) Dispositif automatique pour l'ouverture et la fermeture des bords de tunnel selon la revendication 1 caractérisé en ce que le tube creux (45) présente en sa partie supérieure un serpentin (46) disposé parallèlement au film translucide (40) au-dessus du relevage maximum des bords (39), les extrémités inférieures (47) du serpentin (46) étant prolongées et reliées par un tube creux (48) sur lequel est raccordé le piston (49) agissant sur le câble (50) provoquant la rotation du tambour (53) accouplé au tambour (55) engendrant au moyen d'un câble (56) l'enroulement des câbles (38) sur l'arbre (37).

8°) Dispositif automatique pour l'ouverture et la fermeture des bords de tunnels selon la revendication 1 caractérisé en ce que les circuits fermés comportent une valve de réglage (42).

9°) Dispositif selon les revendications 1 et 2, caractérisé par le fait que le chariot d'enroulement monte ou descent au fur et à mesure que le film translucide s'enroule ou se déroule grâce à l'arbre (63).

Fig.1

Fig.2

0239516

**Fig. 3**

**Fig. 4**

0239516

**Fig.5**

**Fig.6**

0239516

Fig.7

0239516

FIG 8

FIG 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 698 131 (KESINGER) <br> * Colonne 2, ligne 37 - colonne 4, ligne 31; figures 1-4 * | 1 | A 01 G 9/24 |
| A | FR-A-1 215 951 (BASTARD) <br> * Page 1, colonne de droite, avant-dernier paragraphe - page 2, colonne de droite, premier paragraphe; figures 1-4 * | 1 | |
| A | DE-A-2 738 241 (RUP) <br> * Page 10, paragraphe 3 - page 12, paragraphe 1; figure 1 * | 1 | |

DOMAINES TECHNIQUES
RECHERCHES (Int. Cl.4)

A 01 G

Le présent rapport de recherche a été établi pour toutes les revendications

| Lieu de la recherche | Date d'achèvement de la recherche | Examinateur |
|---|---|---|
| LA HAYE | 29-06-1987 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82